# EUROPEAN PATENT APPLICATION

(11) **EP 1 217 806 A1**
(43) Date of publication of application: **26.06.2002**
(21) Application number: 00128219.3
(22) Date of filing: 22.12.2000
(51) Int. Cl.: H04L 29/12, H04L 29/06, G06F 17/30

(54) **Network server and method of controlling a network server**

(71) Applicant: SUN MICROSYSTEMS, INC., Palo Alto, California 94303 (US)
(72) Inventor: Laux, Thorsten O, 20099 Hamburg (DE); Opperman, Lars, 22335 Hamburg (DE)
(74) Representative: HOFFMANN - EITLE

(57) **Abstract**

A method of controlling a server (1) in a network (2) is described, and a server, said server being arranged to output documents (112), where said network comprises a plurality of servers, said servers being arranged such that documents output by said servers are identified by network addresses, said method comprising; providing a document (111) to be output by said server, and if said document to be output comprises one or more network addresses (20), determining if a network address meets a predetermined condition, amending a network address that meets said perdetermined condition with an address supplement, and outputting the document (112) to be output with the amended address (21).

## Description

### Field of the Invention

The present invention relates to a server arranged to be connected to a network, and to a method of controlling a server in a network.

### Background of the Invention

It is known to provide network systems that consist of so-called servers and so-called clients. A client/server architecture means that the client, e.g. a personal computer, appropriate work station, or other type of data processing machine, is the requesting machine and the server is the supplying machine, both of which are connected via an appropriate communication network. In other words, a client sends a request to a server, where the server processes this request, in order to output an appropriate response to the client. It may be noted that a computer acting as a server in one instance may act as a client in another, i.e. while in the one instance providing responses to requests (acting as a server), a computer may in another instance itself issue requests to another computer (act as a client).

The client/server architecture is widely used in a variety of computer networks, such as Local Area Networks (LAN), Metropolitan Area Networks (MAN), or Wide Area Networks (WAN). Another example of such a network is the Internet or the World Wide Web, where clients send requests for documents, e.g. so-called web pages, to servers, which accordingly respond by sending the requested documents.

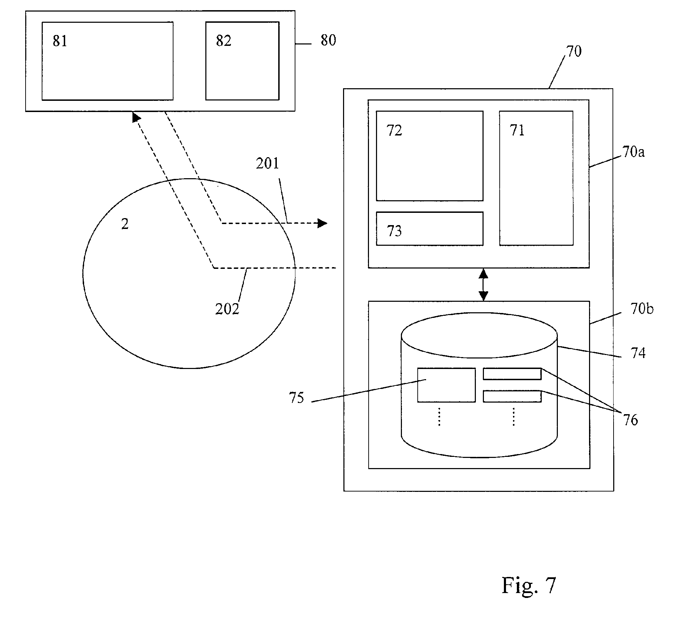

Fig. 7 shows a schematic example of a network 2, to which a server computer 70 and a client computer 80 are connected. Only one client computer and one server computer are shown for simplicity, and a real network will typically connect a large number of server computers and a large number of client computers. The client computer can be any kind of suitable device having the capability of sending requests and receiving documents in response, such as a personal computer, a mobile telephone, a personal digital assistant, etc. As shown in Fig. 7, the server computer typically comprises an operating system 71 and a server program 72, where the server program 72 contains the program logic for providing the server functionality, i.e. the functionality to appropriately respond to requests received from clients.

As shown in Fig. 7, it is also known to provide so-called servlets 73 in a server computer, where servlets are server-side applications that also provide some of the server functionality. Examples of server programs used in the context of the Internet are Netscape, Apache, and servlets can e.g. be embodied as so-called JAVA® servlets. In general, the server functionality will be provided by an appropriate combination of one or more server programs 72 and one or more servlets 73.

The term "server" in the context of the present application shall be used to refer to any appropriate combination of hardware (such as the server computer 70) and software (such as the server program 72 and servlets 73) that provides the described server functionality.

The server computer 70 furthermore comprises a storage medium 74, such as a hard disk drive, which stores documents 75 and/or document elements 76. The server outputs documents in response to requests, where said documents are stored as such (documents 75) and only retrieved, and/or such documents are generated from documents elements 76 by appropriate procedures.

Fig. 7 furthermore schematically shows the functional structure of the client computer 80, which equally comprises an operating system 81, and an appropriate client program arranged to interact with the server program 72 and/or servlets 73 provided on the server computer 70. An example of a client program is a so-called network browser, such as an Internet browser.

As shown in Fig. 7, the client computer 80, or more specifically the client program 82 outputs a request 201, and the server outputs an appropriate response 202. The network 2 and server is organized in such a way that the output of specific documents by the server computer 70 is requested with the help of appropriate network addresses. In other words, a network address specifies or identifies a specific document on a specific server, such that a request containing such an address will result in the server outputting the corresponding document.

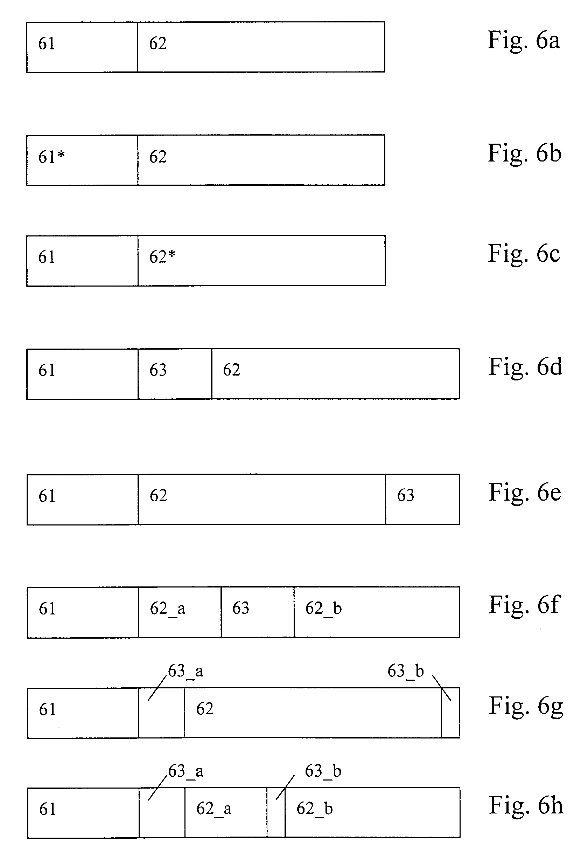

In principle, such addresses may have any appropriate structure. Typically, they will have a structure as shown in Fig. 6a, namely a first part 61 that identifies a server, and a second part 62 that identifies a specific document to be output by the server identified in part 61. It may be noted that Fig. 6a is a schematic representation of the logical structure of such an address, as it is possible that the physical elements of such an address (e.g. specific symbols) are mixed between the two parts 61 and 62, but identifiable by appropriate procedures. Naturally, it is equally possible that an network address indeed has a physical form as shown in Fig. 6a, namely one section 61 of contiguous symbols, and a second section 62 of contiguous symbols. An example where the latter is the case are so-called URLs (Uniform Resource Locators), as shall be explained further on.

The routing elements (not shown) in the network 2 that forward the request from the client computer 80 to the server computer 70 will typically only consider the first section 61 identifying the server, to thereby transport the request to the appropriate server, while the server then identifies the document to be output by referring to the second section 62. The second section 62 can be generated in accordance with any appropriate coding scheme, but will preferably itself have a hierarchical structure, where the hierarchical structure of the address part 62 is a reflection of a hierarchical storage or filing structure in the storage medium 74 provided in the server computer 70 identified by the first address part 61.

An example of such addresses is the use of so-called Uniform Resource Locaters (URLs) in the Internet. An example of a hypothetical URL could be:
http://www.example.com/directory1/subdirectory1_2/exampledocument.html

The first part up to the two slashes (i.e. "http:") indicates the protocol of the server to be accessed, and the part following up to the next slash ("www.example.com") is a so-called domain name that identifies a server. The following parts ("directory1", "subdirectory1_2") indicate directories and subdirectories on that server, up to a specific document name ("exampledocument.html"). The slashes ("/") serve as delimiters for distinguishing between different parts and sub-parts of the URL.

With respect to the above-described two sections 61 and 62, the section "http://www.example.com" therefore corresponds to section 61, and the remaining part of the URL corresponds to section 62.

It may be noted that the above is only an example, as there is a large number of different protocols that can be indicated in the prefix besides the shown hypertext transport protocol (http), and there is also a wide variety of possibilities for forming domain names, e.g. with alternative extensions such as .org, .gov, etc.

It may be noted that one server computer 70 may be the host to a plurality of domains, such that a plurality of domain names leads to a single server computer. It is also possible that a domain name leads to a gateway server, where the gateway server is the bridge from the shown network 2 to another second network (not shown) containing a plurality of servers associated with said second, distinct network. In this case the section 61 leading to a specific server containing documents will be longer than just the domain name, and be specified by further addressing information.

A document output by a server can be any appropriate collection and combination of data elements, which will depend on the specific nature and purpose of the client/server network. For example, the World Wide Web, which operates on the Internet, is a system with requesting and sending so-called web pages, i.e. pages that contain text, pictures, and other data elements. Among such other data elements are also so-called hyperlinks, which are links to other web pages. A hyperlink therefore comprises a specific URL (as an address or identifier of a specific web page), and if a user of the client computer appropriately operates the client program (e.g. a web browser), then a request is sent out for obtaining the web page identified by the address comprised in the operated hyperlink. Typically a hyperlink will appear in a highlighted fashion on the screen of the client computer running the browser, or appear as an icon indicating a link. By clicking on to the icon or highlighted indication, the user invokes a process in the browser for requesting a web page having the address indicated by the hyperlink.

The purpose of such hyperlinks is to simplify the use of the system for users of client programs such as browsers. This is well known in the art and need not be described in further detail here.

It may be noted that the embedding of hyperlinks into web pages, which may be created in accordance with a plurality of markup languages, such as the HyperText Markup Language (HTML), the Standard Generalized Markup Language (SGML) or Extensible Markup Language (XML) is only an example. Namely, it is possible to insert addresses as link elements into any appropriate documents output by servers in a client/server network in which server output documents in response to requests containing network addresses that identify documents.

It is desirable to provide an improved client/server network system.

### Summary

Embodiments of the present invention provide a method of controlling a server in a network as specified by claim 1, and a server as specified by claim 26.

If a document to be output by a server comprises a network address, such as the above-mentioned URL in the example of the Internet, then it is determined if the network address meets a predetermined condition, e.g. is contained in a link element and/or identifies a document to be provided by the specific server, where the network address contained in a document is amended by an address supplement if the predetermined condition is met, and the document is output with the amended address.

In other words, a server in a network is able to introduce address supplements into network addresses that are sent out as elements of documents output by said server. This provides the advantage of an additional degree of freedom in network performance and the control of individual servers.

For example, the address supplement can be a simple indicator identifying the server. In this way, if a server receives a request containing an address, the server receiving the request is able to identify if the address contains an address supplement. If a supplement is contained, then it can determine that the request was generated on the basis of a document generated by the server identified by the corresponding address supplement. This can have great advantages for statistical purposes, but also for overall network control.

According to a preferred embodiment, the address supplement is a locally generated, variable data element arranged to make amended addresses included in documents output subsequently to one another distinguishable, where these addresses are derived from one network address. In other words, in documents output at different times (which may be the same document or different documents), it is arranged that amended addresses included in said documents (for example as link elements) generally be different, even if they are derived from the same network address. This system provides the advantage that it is possible to overcome a specific problem due to some client programs that cache documents sent in response to requests. More specifically, client programs are known that will typically store a number of documents received in response to requests, and if a user of the client computer performs an operation that would request a cached document, then this document is retrieved from the local cache memory in the client computer and not requested from the server arranged to output the document.

This function provides a quicker response for the user and avoids unnecessary transmissions. On the other hand, such a caching system is disadvantageous if documents on the server are regularly updated, such that the retrieval of a cached document will in fact provide the user with an out-of-date document. There are mechanisms that can be adjusted in the client program, e.g. an adjustment that no documents are to be cached, or that specific documents are not cached. However, this requires that the user is aware of such requirements and is able to perform the appropriate adjustments in his client program.

With the above-mentioned preferred embodiment, the server will introduce successively different address supplements into one network address, such that the amended address leading to the same document will be different in subsequent documents. In other words, a network address, which may be represented as a1 for illustrative purposes, is amended to become a1' in a first document sent at a first point in time t1, and amended to become a1" in a second document (which may or may not be otherwise identical to the first document) sent out at a second point in time t2, where t2 is later than t1 and a1' is different from a1", although the underlying network address a1 is the same for both amended addresses. Thereby, even if a document having a specific amended address (i.e. said specific address including the address supplement) belonging to a given network address is cached, the actuation of a link element in a document identifying said cached document having the given network address will have a different amended address, although the network address is the same for both. The consequence is that the client program will look into the table of cached documents, by referring to the addresses, and will see that the link element actuated in the present document does not indicate the address of a cached document, to thereby output a request to the server. In this way, the client program automatically receives an up-to-date document, even if it is adjusted in such a way that it caches arbitrary documents. In other words, the presently described preferred embodiment is a way of making clients always request up-to-date documents, without in fact having to perform any adjustments in the client program, but rather only introducing a variable address supplement on the server side.

The mentioned variable data element can be derived in any appropriate way. Any process that provides subsequently different values that can be used for generating subsequently different address supplements is suitable. Preferably, the different values should be unique, although this is by no means necessary and it is sufficient if the probability of an occurrence of identical address supplements is not too high. For example, the address supplements can be derived from a counter-value that is consecutively incremented when addresses are included in documents being sent out, or can be derived from a timer-value. Another way of generating such address supplements is to use a random number or pseudo-random number generator, an incremented pointer to a cyclic table of sufficient length, or a hash function.

It is also possible to combine the identification feature with the up-dating feature, by generating appropriately combined address supplements.

The amending of the network addresses can be performed in any suitable way, and it is possible to amend the first part 61 and/or the second part 62. If the first part 61 is amended, then the network routers must be appropriately modified, in order to be able to identify the servers. Therefore, it is preferable that the amendment to the addresses only be performed with respect to the second part 62, and that the part 61 identifying a specific server in the network remain unchanged. In this way, embodiments of the method and device of the present application need not require any modifications to the network.

### Brief Description of Figures

Embodiments of the invention shall now be described with reference to the enclosed figures, where
- Fig. 1: gives a schematic overview of an example of a server according to an embodiment of the present invention;
- Fig. 2: gives a flow chart of an example of a method according to an embodiment of the present invention;
- Fig. 3: shows a flow chart of another example of a method according to an embodiment of the present invention;
- Fig. 4: shows a flow chart of an overall session embodying an example of the present invention;
- Fig. 5a: shows a flow chart of an example of amending a network address with an address supplement according to an embodiment of the present invention;
- Figs. 5b and 5c: show flow charts of further examples of a method of amending a network address with an address supplement according to embodiments of the present invention;
- Figs. 6a-6h: show various schematic examples of address structures according to embodiments of the present invention;
- Fig. 7: shows a schematic representation of a network containing a server computer and a client computer according to an embodiment of the present invention;
- Fig. 8a-8c: show a flow chart describing an application of the present invention to a web server for providing web pages identified by URLs; and
- Fig. 9: shows a schematic example of successively amending a network address with different address supplements according to an embodiment of the present invention.

### Detailed Description of embodiments of the present invention

Now embodiments of the present invention shall be described. It should be noted that although these embodiments describe examples of the invention in detail, this detailed description only intends to provide the skilled person with a good understanding, but is not intended to limit the scope of the present invention, which is instead defined by the appended claims.

Some of the examples below will refer to subject-matter described in the introduction of the present application. The introduction of the present application is herewith incorporated into the disclosure of the invention, in order to avoid any unnecessary repetition.

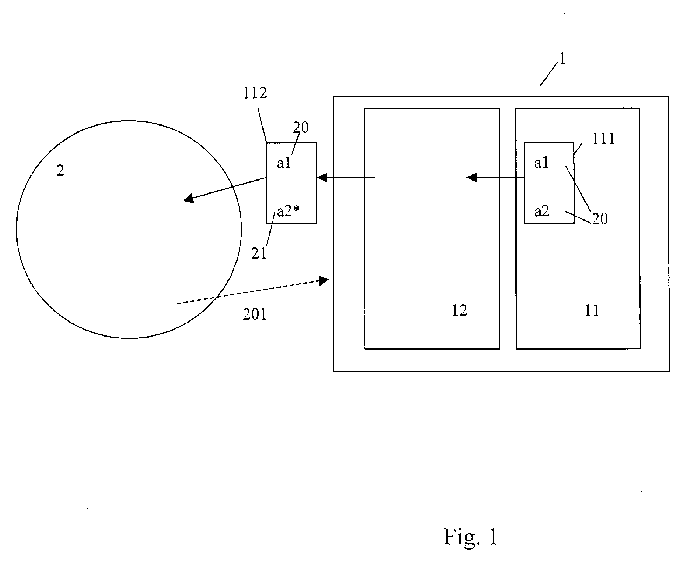

Fig. 1 shows a schematic overview of a system embodying the present invention. Reference numeral 1 refers to a server, said server comprising a document providing unit 11 and an address amending unit 12. The document providing unit 11 is arranged to provide documents, where the documents are identified by network addresses. The address amending unit 12 is arranged to identify specific network addresses that are included in documents to be output or are to be included in documents to be output, and is arranged to amend such specific network addresses with an address supplement, if a predetermined condition is fulfilled. The predetermined condition may be single requirement, or a plurality of requirements.

The server 1 shown in Fig. 1 is comprised of hardware, software or any suitable combination of hardware and software. For example, the server having the functionality shown in Fig. 1 can be implemented in a server computer 70 as shown in Fig. 7, with the help of appropriate server programs 72 and possible servlets 73. The document providing unit 11 can e.g. be an appropriate code section in a program, or appropriate code sections in a plurality of programs, where the document providing unit 11 calls up documents 75 stored in the storage medium 74, or comprises routines for generating documents on the basis of document elements 76 stored in the storage medium. In any case, documents to be output are identified by network addresses. Therefore, the server 1 will have a record of addresses associated with the server 1, and a means, such as a table, for identifying which document belongs to which address.

For example, if the server 1 is an Internet server, then documents to be output are identified by URLs, where the URLs have the above mentioned hierarchical structure that reflects a hierarchical file structure, such that each URL indicates a specific path in a file structure stored in storage medium 74 to a specific document to be output. For example, the document can be a web page. It may, however, be noted that the document can be any type of document, such as e.g. a text document, picture document, sound document, spread sheet document, or any other type or combination of document.

The address amending unit 12 determines if a network address included in a document to be output fulfils a predetermined condition, and then appropriately amending or not amending that network address, depending on the outcome of the determination.

For example, taking the example of the web server arranged to output pages containing hyperlinks, the amending unit 12 may then be arranged to identify if a network address (such as a URL) is part of a hyperlink, and possibly if it fulfils some supplementary condition, e.g. is an address identifying a page in the server 1, or is an address identifying a page that belongs to a predetermined subgroup of pages in the server 1.

If one or more network addresses in the document are identified that fulfil the condition, then the one or more addresses are amended, and the document is output with the amended addresses. This is shown schematically in Fig. 1, where a document 111 provided by the document providing unit 11 contains two network addresses 20, shown as a1 and a2. In the example shown in Fig. 1, it is assumed that one of the network addresses (a2) fulfils the condition, and is thereby amended to become an amended address 21, shown as a2*. The other network address (a1) remains unchanged. Consequently, the amending unit 12 outputs a document 112 containing a network address 20 (a1) and an amended address 21 (a2*). The amended address 21 is derived from a network address 20, but furthermore contains an address supplement generated locally in the server 1. Examples of this shall be explained in more detail further on.

The document 112 is then output to network 2 as a response to a request 201, where this request will typically not only identify a document to be output, but also identify the requestor, such that a reply can be sent to said requestor.

Therefore, document 112 shown in Fig. 1 is sent to the requestor via network 2.

Although a document sent out by a server will typically be output in response to an appropriate request, this is not necessarily always the case. Rather, it is also possible that a server will output documents in response to an internal procedure, without having received a specific request for such a document. For example, if the network comprises a type of mailing functionality, it is possible that a server 1 is a mailing hub, from which documents are sent out to a large number of users/clients, without any of these users/clients having requested such a document.

As already mentioned, the documents to be output by server 1 are identified by network addresses. In other words, the document providing unit 11 will have the functionality to identify a document on the basis of a network address, and to provide the identified document. Preferably, the address amending unit 12 has a function of being able to distinguish between network addresses and amended addresses in a received request. If an address is an amended address, then the address supplement is removed (e.g. to be discarded if it has served its purpose, or to be processed further if it contains information of interest) to thereby derive the underlying network address, and the network address is then passed to the document providing unit 11. The advantage of this arrangement is the document providing unit 11 need not be changed in any way. Consequently, the address amending unit 12 then additionally performs a type of filter function, namely to filter out address supplements from amended addresses it receives in requests.

On the other hand, it should be noted that such a structure is not necessary, as it is possible that the document providing unit 11 also contain the functionality of being able to identify documents on the basis of amended addresses, e.g. by itself having the capability of removing address supplements from received addresses.

Preferably, the invention is applied to systems such that addresses associated with link elements in documents can be amended. Therefore, it is preferable that at least a part of the condition that leads to addresses being amended is that the address is contained in a link element. Link elements in documents are such elements that have a format so that a user receiving the document may generate a request containing the address associated with the link element. An example of such a link element is the well known hyperlink used in Web pages. A user/client can then request the page belonging to the hyperlink by simply activating such a hyperlink, e.g. with a mouse click.

In this way the present invention provides a further degree of freedom in the context of such client/server networks in which documents are identified by network addresses, because the individual server can introduce its own supplement into addresses, which can provide numerous advantages, depending on the specific purpose and application.

For example, the address supplement can be used for identification purposes. Namely, the address supplement can be an identifier of the server performing the amendment, or can be an identifier of the page in which the amended address is contained. In this case, a server receiving an amended address can not only identify the document being requested, but is also able to identify from which server the page came in which the amended address was contained, or even in which page the amended address was contained. This can be very useful for statistical purposes and for generally monitoring user behaviour, as well as traffic behaviour on the network, without having to directly monitor the network.

If the address supplement is used as an identifier, then typically the same address supplement will be used to identify the same entity. For example, if the address supplement serves to identify the server performing the amendment, all address supplements added to network addresses by a given server will be the same. Equally, if the address supplement is to identify the document in which the amended address is contained, then the address supplement will be the same every time that an address in that document is amended.

It is understandable that the predetermined condition that leads to a network address being amended or not will typically depend on the purpose on the amendment procedure. For example, in the above mentioned case where the address supplement serves to identify the server performing the amendment, the predetermined condition will e.g. simply be the determination if the network address in the document belongs to a link element. Namely, the server will amend all network addresses in all link elements by inserting its address supplements for identification. In this way, if the link element is actuated by a user/client, then a server receiving the corresponding request can determine that the request was generated on the basis of a link element in a document output by the server that inserted its identifying address supplement.

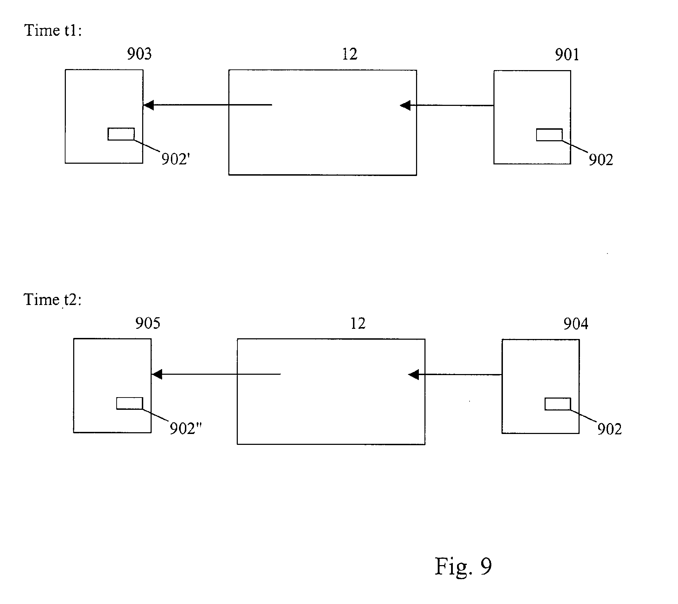

The address supplement can also be used as a means for making amended addresses included in documents that follow one another different, so that these subsequent addresses are distinguishable, even though the subsequent amended addresses are derived from the same network address. This is explained in some more detail in connection with Fig. 9. In the upper part of Fig. 9, at a point in time t₁, a document 901 containing a network address 902 is processed by the address amending unit 12, where the address 902 fulfils the predetermined condition, such that a document 903 containing an amended address 902' is output. The bottom part of Fig. 9 shows a point in time t₂, where t₂ is later than t₁, and a document 904 containing the same network address 902, is to be output. In this case the address amending unit 12 again performs an amendment, but the amendment is done with a different address supplement, such that a page 905 is output containing an amended address 902" that is different than the previous amended address 902'. It may be noted that document 901 may be the same document as document 904, or may be a different document.

Using the address supplement in such a way is useful in networks employing clients that have a caching function. An example of a client program having such a caching function are network browsers, such as the browsers used for navigating in the Internet. Namely, such client programs will typically store received documents in a cache directory, such that if the user of the client program would like to have a specific document, the client program does not immediately send a request to the appropriate server, but rather checks if the desired document is already stored in the cache directory. This is typically accomplished by keeping a record of all the addresses of the documents stored in the cache directory. Consequently, upon the user's action of desiring a specific document (e.g. by clicking a link element that is associated with a given address), the client program will check the record of cached documents by comparing the address of the desired document with the addresses of the cached documents. Typically the addresses of the cached documents are kept in a separate table or record. Then, if the client program determines a match between the desired address and a cached address, then the document is retrieved from the cache, and no request is sent to the server. The purpose of such a functionality is to provide the user with a quicker response, and to avoid unnecessary network traffic.

On the other hand, this functionality is disadvantageous if the documents provided by the server are constantly updated.

Namely, in such a case it can happen that a user will desire a specific document but will only receive an old document from the local cache of the client computer, instead of the up to date document from the server.

Mechanisms are known for adjusting a client program (such as a browser) in such a way that either no caching takes place, or specific documents contain a mark telling the client program that this specific document should always be requested from the server. However, such mechanisms only work if the client program is appropriately adjusted, which can not be influenced by the server. The presently described embodiment of the invention offers a simple and effective mechanism for avoiding the above described problems. Namely, by outputting different amended addresses in documents sent subsequently to one another (where these documents may be different, i.e. may be identified by different network addresses, or be the same, i.e. identified by the same network address) the client program will never achieve a match with respect to cached documents, regardless of how the caching procedure is specifically implemented. Namely, according to one possibility the client program will keep a record of the network addresses associated with received documents. In this case there will never be any match, as the amended addresses will always be different from the network addresses for the same document. According to a second possibility, the client program keeps a record of cached documents on the basis of the address used for requesting said document. In this case, if the cached document was requested using an amended address contained in some other document (e.g. a hyperlink), then a subsequent document containing an amended address referring to the same original network address will be different from the recorded address at the client program, as explained in connection with Fig. 9. Consequently, there will again be no match.

Thus, regardless of a caching function being enabled or not, and regardless of the implementation of the caching function, the client program will request a document of the server if the user actuates an amended address, such that it is possible to always provide the user with an up to date document. The presently described embodiment of the invention thereby teaches a simple mechanism according to which a server can influence the behaviour of a client program such as a network browser, without directly having to perform any adjustments in the client program.

As already noted earlier, the predetermined condition that a network address must fulfil in order to be amended will depend on the specific application. In the presently described embodiment, a predetermined condition can e.g. be if the network address is a part of a link element, and/or if this network address identifies a specific document that is intended to be regularly updated. Therefore, an example implementation for performing the determination regarding the predetermined condition could consist in keeping a table in the address amending unit 12 (see Fig. 1), where said table identifies a group of documents arranged to be provided by the server 1, that group being all of the documents that are changed regularly, such that any client/user should always request such a document from the server, in order to receive the most up to date version.

The generating of a variable address supplement is preferably done on the basis of a variable data element. There are various possibilities for generating a variable data element for this purpose. For example, such a variable data element can be a counter value, where the corresponding counter counts the events of amending addresses in documents being sent out. In other words, the counter value is incremented each time that an amended address is included in a document being sent out. Then the address supplement is calculated from the current counter value. The procedure for determining an address amendment from the counter value should be such that different counter values lead to different address amendments. For example, the counter value itself can be used as an address amendment.

If the server is arranged to conduct individual user sessions for individual users accessing services, then the server can be arranged to keep individual counter values for each individual user, such that the user counter value associated with a user requesting a document is used as a basis for generating address supplements destined to amend network addresses in documents to be sent to said user associated with that user counter value. Typically the user counter value will be reset to a predetermined value, such as 0, at the beginning of each user session.

An alternative possibility for generating an address supplement is to use a timer value as a basis. Typically a computer system will have one or more internal clocks, and such an internal clock value can be used as a basis for generating an address supplement that has the feature of being different for subsequent amended addresses relating to the same network address. For example, it is possible, to use the timer value itself as an address supplement. Typically such a timer value will be a multiple of a basic time unit, such as a millisecond, said multiple identifying a time span from a predetermined starting date, such as January 1, 1970, to the momentary point in time. If the use of such a value is impractical, e.g. due to the size of the value, it is possible to derive an address supplement as a time dependent increment, in which case the timer value is divided by a number of time units corresponding to a predetermined period of time (e.g. the number of milliseconds corresponding to one week), and the integer remainder value is then used as an address supplement. In other words, a modulo operation is conducted. It may be noted that the use of a time increment entails the possibility that two subsequent address supplements might be identical, but if the period of time associated with the increment (e.g. one week, as mentioned above) it is not too short, then the chance of such an event occurring is very small. Also, even if identical address supplements appear from time to time, this does not reduce the basic effect and usefulness of the present embodiment.

Although the above embodiments used a counter value or a timer value as a basis for generating distinguishable address supplements, this is no restriction. Rather, the mentioned variable data element can be derived in any appropriate way. Any process that provides subsequently different values that can be used for generating subsequently different address supplements is suitable. Preferably, the different values should be unique, although this is by no means necessary and it is sufficient if the probability of an occurrence of identical address supplements is not too high. Purely as examples, other ways of generating such address supplements can also be to use a random number or pseudo-random number generator, an incremented pointer to a cyclic table of sufficient length, a hash function, etc.

Although the above described examples referred to cases where the address supplements are used for identification purposes or to ensure that client programs receive up to date documents, other uses are possible, depending on the specific desires and requirements. Also, it is possible to combine the identification feature and updating feature, e.g. by constructing address supplements with an identification part and a variable part.

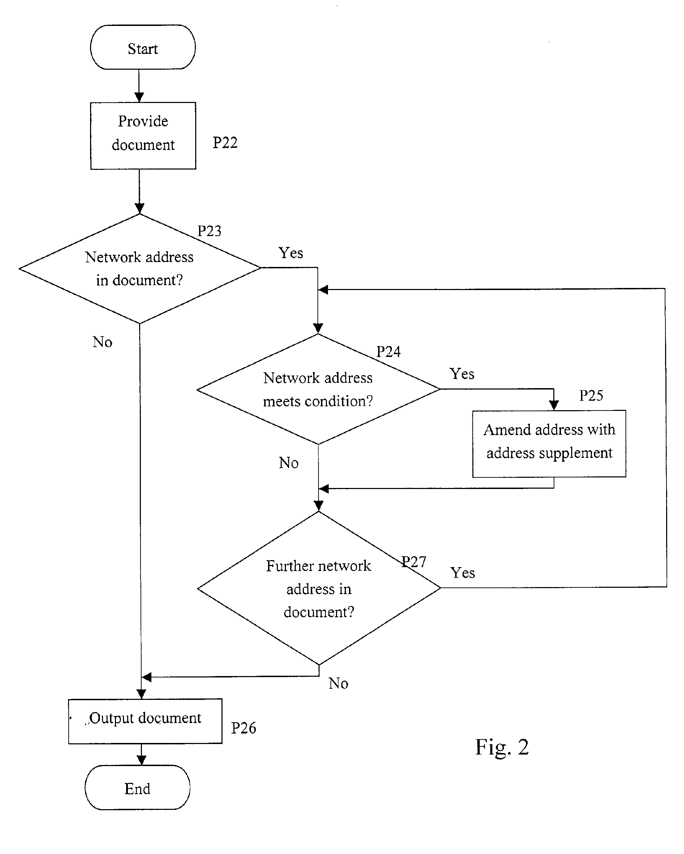

Now an embodiment of the present invention shall be described by referring to the flow chart of Fig. 2. Fig. 2 shows a routine providing the functionality described above in connection with Fig. 1. In a first procedure P22, a document is provided. Then in a procedure P23, it is determined if a network address is contained in the provided document. If the document contains a network address, then the routine branches to procedure P24, in which it is determined if the identified network address meets the above mentioned predetermined condition, i.e. fulfils one or more requirements. If the predetermined condition is met, then the routine branches to procedure P25, in which the address is amended with an appropriate address supplement, said address supplement being generated according to one of the above mentioned possibilities. After having performed the amendment in procedure P25, or if the outcome of procedure P24 indicates that the network address does not meet the predetermined condition, the routine goes to procedure P27, in which it is determined if the document contains a further network address. If it does, the routine branches back to procedure P24, and if not, the routine goes to procedure P26, in which the document is output, possibly with amended addresses. If the determination in procedure P23 is such that the document does not contain an network address, the routine passes directly from procedure P23 to procedure P26.

In the example of Fig. 2, it was assumed that the document providing unit 11 calls up a finished document and the document amending unit 12 then analyses the provided document, in order to determine if any network addresses are to be amended.

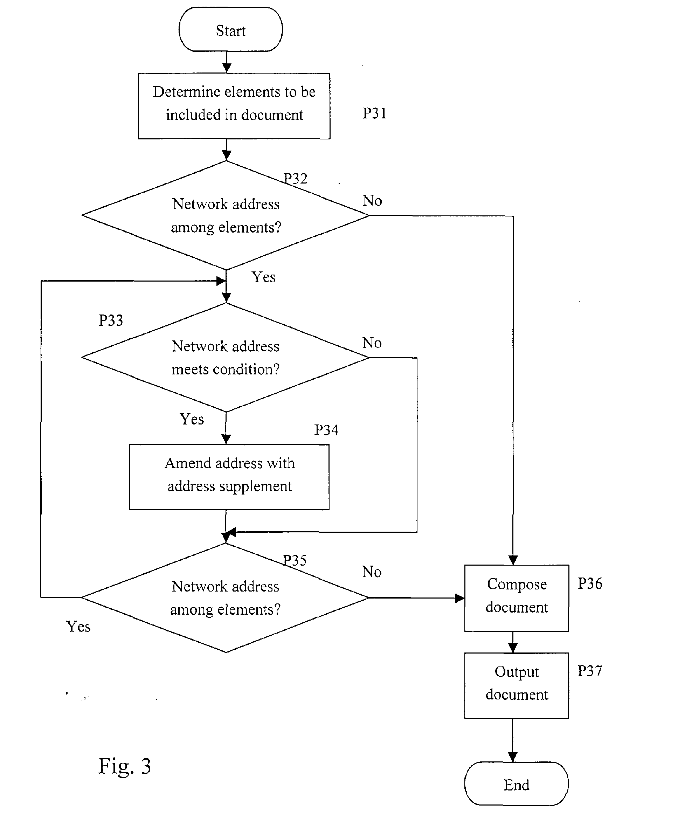

Fig. 3 shows an alternative embodiment, in which the server 1 is arranged to compose documents from document elements appropriately stored in the server. In Fig. 3, a first procedure P31 determines elements to be included in a document to be output. Then, in procedure P32, it is determined if a network address exists among the elements. If not, the routine passes to procedure P36, in which a document is composed on the basis of the elements determined in procedure P31. Thereafter, the composed document is output in procedure P37.

However, if the outcome of procedure P32 indicates that the elements contain a network address, the routine passes to procedure P33, in which it is determined if the identified network address meets the predetermined condition, examples of such predetermined conditions having been described above. If the network address does not meet the condition, the routine passes to procedure P35, in which it is determined if further network addresses are among the elements. If yes, then the routine loops back to procedure P33, and if not, the routine passes to procedure P36, where the document is composed on the basis of the elements determined in P31 and possibly with one or more addresses amended by procedure P34. Procedure P34 is invoked if the outcome of procedure P33 is positive, e.g. a network address meets the predetermined condition, in which case P34 amends the address with an address supplement.

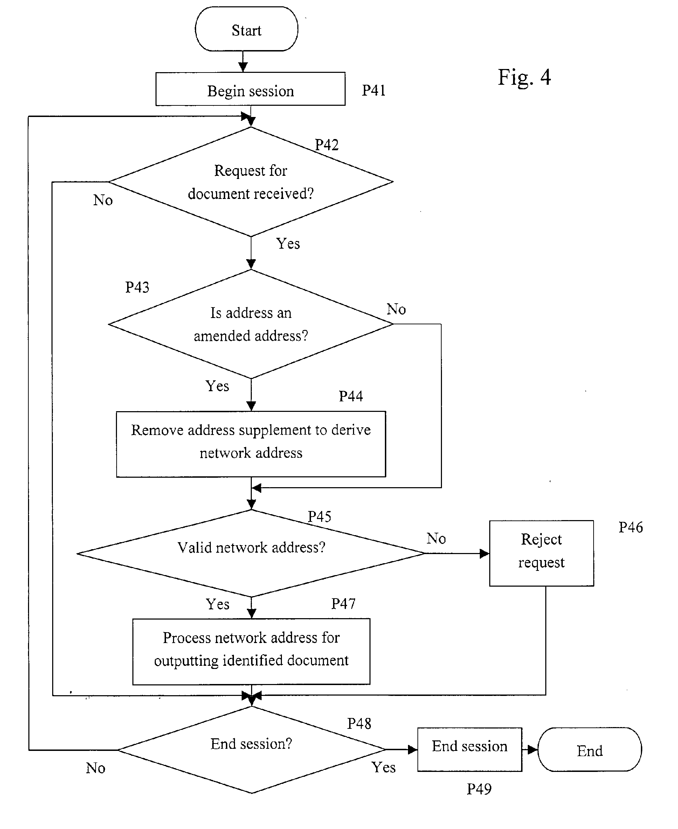

As already mentioned previously, it is possible that the server is operated to output documents without having received any outside requests for documents. However, the server typically provides documents as a response to outside requests. Fig. 4 shows an example of a routine for processing requests and appropriately providing documents as a response in a session based system. Procedure P41 indicates the beginning of a session. The beginning of a session can be initiated in any suitable or desired way, e.g. by a user explicitly logging on to the server, or by an implicit logon based on a first request containing some form of user/client identification.

Procedure P42 determines if a request for a document has been received. If a request has been received, the routine proceeds to procedure P43, in which it is determined if the address is an amended address, where amended address means that it has been amended with an address supplement as generated in accordance with the present invention. If the address is an amended address, the routine passes to procedure P44, in which the address supplement is removed from the amended address, in order to derive the underlying network address. Then, in procedure P45, it is determined if the network address is a valid network address. The validity of an network address will depend on the specific situation and network, and can be determined e.g. on the basis of the format of the address, and/or on the basis of its contents. For example, if an address identifies a specific server, but then does not identify any documents that the server is capable of providing, then such an address may be considered an invalid address. If procedure P45 judges a network address to be invalid, then the routine passes to procedure P46, in which the request is appropriately rejected. For example, the rejection can comprise sending a rejection message to the user that sent the request, where that rejection message may or may not contain an error indication, or alternatively a rejection of the request can also consist in silently discarding the request, which means that no response is issued.

If the outcome of procedure P43 is negative, e.g. the address is not an amended address, the routine passes directly from procedure P43 to procedure P45.

If the outcome of procedure P45 is positive, e.g. the network address is valid in the terms of the specific network and specific server, then the routine invokes procedure P47, in which the network address is appropriately processed and an identified document is output. More specifically, procedure P47 can e.g. be identical to one of the routines shown in Figs. 2 or 3.

After procedure P47, procedure P48 determines if the session is to be ended. It may be noted that procedure P48 is also conducted after procedure P46, and in the event of a negative outcome of procedure P42. If the session is not to be ended, then the routine loops back to procedure P42, and otherwise ends the session in procedure P49.

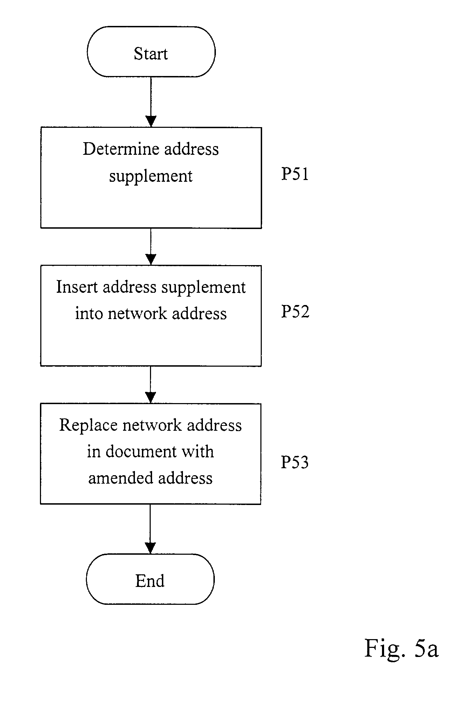

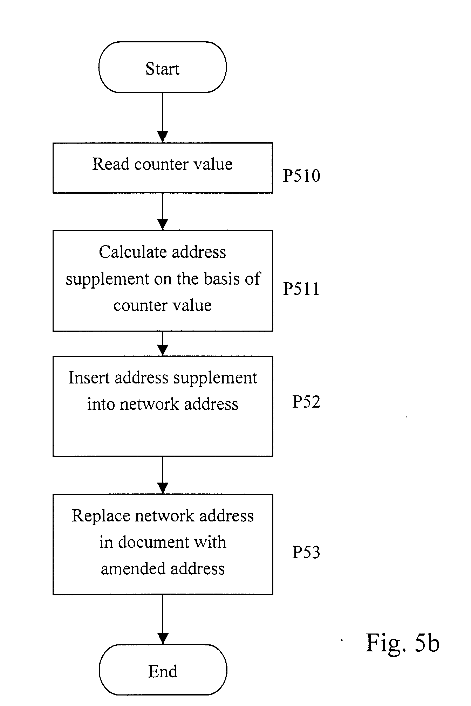

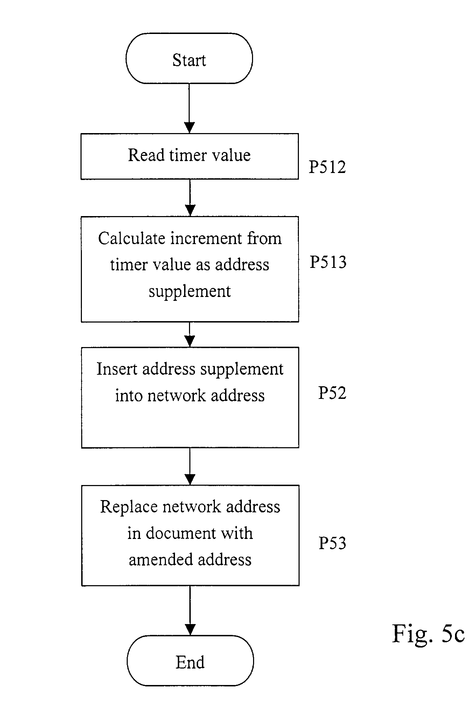

Figs. 5a, 5b and 5c describe embodiments for performing the process of amending addresses with address supplements e.g. the process P25 shown in Fig. 2 or the process P34 shown in Fig. 3. In Fig. 5a, a procedure P51 determines the address supplement. This has already been explained previously, and can e.g. consist in deriving an address supplement from a counter value or a timer value. Then, in a procedure P52 the determined address supplement is inserted into the network address. This process shall be explained in more detail further on in connection with Fig. 6a-6h. Then, procedure P53 replaces the network address in the document with the amended address.

With respect to Fig. 5a, it may be noted that procedure P51 can also be omitted, namely in the specific case that the address supplement is a constant, as e.g. described above in the example where the address supplement acts an identifier of the server performing the amendment.

Fig. 5b shows an example of procedure P51, namely a procedure P510 that reads an appropriate counter value, and a procedure P511 that calculates an address supplement therefore. Fig. 5c shows a further example of P51, where procedure P51 comprises a procedure P512 for reading a timer value, and a procedure P513 that calculates a time dependent increment from the timer value, as described above.

Figs. 6a to 6h shall now be referred to, in order to explain various examples of introducing an address supplement into a network address. Fig. 6a shows a schematic representation of a network address, where said network address comprises a first part 61 that identifies a server, and a second part 62 that identifies a specific document to be provided by the server identified in the first part 61.

The amendment to the network address can be performed in any suitable or desired way. For example, as shown in Fig. 6b, it is possible to convert the first part 61 into an amended first part 61* where the first amended part 61* is generated by appropriately performing an operation on the first part 61 of the network address by using the address supplement. An alternative is shown in Fig. 6c, in which case the second part 62 of the network address is processed and converted on the basis of the address supplement, in order to produce an amended second part 62*. Although not shown, it is also possible to generate an amended address by performing an operation on both the first part 61 and the second part 62.

As already mentioned above, although it is possible to amend the first part 61 that identifies a specific server, this leads to the necessity of updating routers in the network 2, such that amended addresses can be handled. It is therefore preferable to only amend the second part 62, such that the network routing process is not influenced.

Also, for the purpose of simplicity, it is preferable that the amending of the address is done by simply inserting or adding an appropriate data element to the network address. As shown e.g. in Fig. 6d, the address supplement 63 is simply inserted between the first part 61 and the second part 62. In other words, the first part 61 remains unchanged, and the part following the part 61, which would conventionally be regarded as the identifier of a specific document on the server identified in first part 61, becomes a "new" part consisting of the original second part 62 and the address supplement 63. Naturally, the address supplement 63 can also be added at the end of the second part 62, as shown in Fig. 6e. Furthermore, arbitrary configurations can be chosen for generating a part that follows the first part 61, where Fig. 6f shows an example, in which the original second part 62 is divided into a first element 62_a and a second element 62_b, where these two elements are separated by the address supplement 63. Fig. 6g shows the case where the address supplement is separated into two parts 63_a, 63_b, respectively provided before and after the original second part 62. Finally, Fig. 6h shows the mixed case of Figs. 6f and 6g, in which both the original second part 62 and the address supplement are separated into respective parts 63_a, 63_b and 62_a, 62_b.

The configurations described in connection with Figs. 6a to 6h can be used in connection with any type or system of addressing. In the following, a few examples shall be given for the case that the network addresses are URLs. Regarding Fig. 6d, an original URL such as
http://www.example.com/destination.doc
could be amended by inserting a data element consisting of a predetermined number of digits, e.g. 8 digits, such as "abcd0345", in order to generate
http://www.example.com/abcd0345/destination.doc

Naturally, this is only an example. The address supplement can be any arbitrary combination of characters or symbols, and can be a number, a string or a combination of a number and string. For example, when using a counter value or a timer value as a basis, the address supplement will typically be a number. Also, the address supplement can have more or less than 8 digits. Furthermore, it is possible that the address supplements have a variable length.

Preferably, the address supplements will have a predetermined format, such as a starting delimiting symbol and an ending delimiting symbol, such that the beginning and end of an address supplement can be determined by a server. For example, one can introduce the convention that the address supplement is always added after the first slash ("/") to follow the "<protocol>://"-indication in a URL, and that the address supplement ends at the next slash. In this way, the address supplement replaces the first subdirectory indication in a URL. As a consequence, a server can identify a network supplement (and thereby an amended address) by first determining the indication following the first slash is a valid directory, and if not, extracting the expression between the two slashes, to thereby generate a normal URL, e.g. a conventional network address.

In addition, if a URL contains an application name, e.g. a servlet name that follows the domain indicator, such as
http://www.example.com/servlet_name/directory_1/destination.doc
it is possible to insert the supplement behind the application indicator, such as
http://www.example.com/servlet_name/6353745/directory_1/destination.doc
where "635374" indicates an address supplement in this example. Therefore, the supplement again replaces the first subdirectory indication.

An alternative in connection with URLs is to add the data element having a predetermined format and structure at the end of each URL, as shown in Fig. 6e. Namely, any server is then able to check if there is a data element after the last indication (the file indicator, e.g. "destination.doc" in the example above) in a received address, and if so, this predetermined structure can be extracted and possibly processed further, e.g. for identification purposes.

It is to be understood that mixed concepts, such as those shown in Fig. 6f to 6h, are equally applicable for URLs.

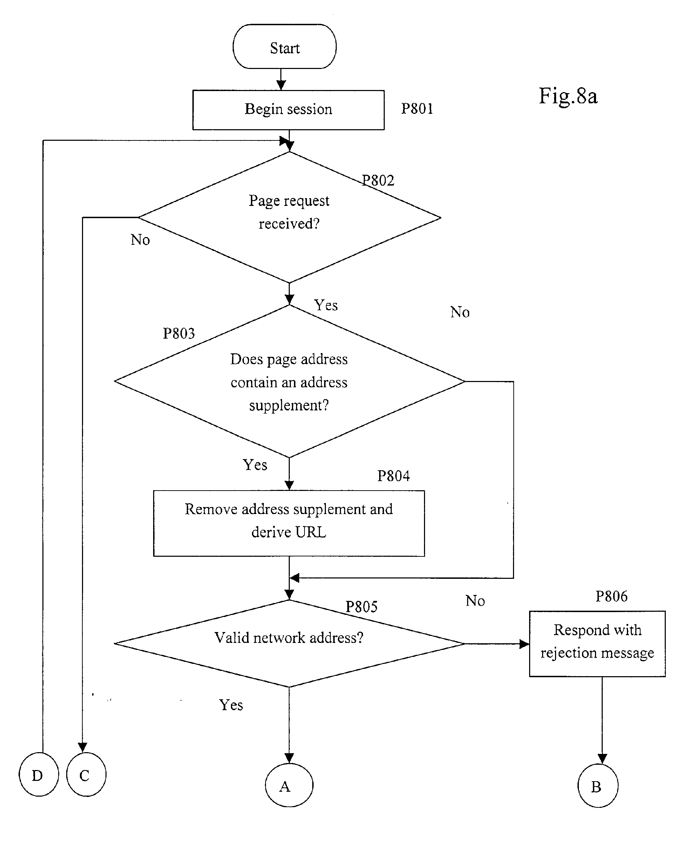

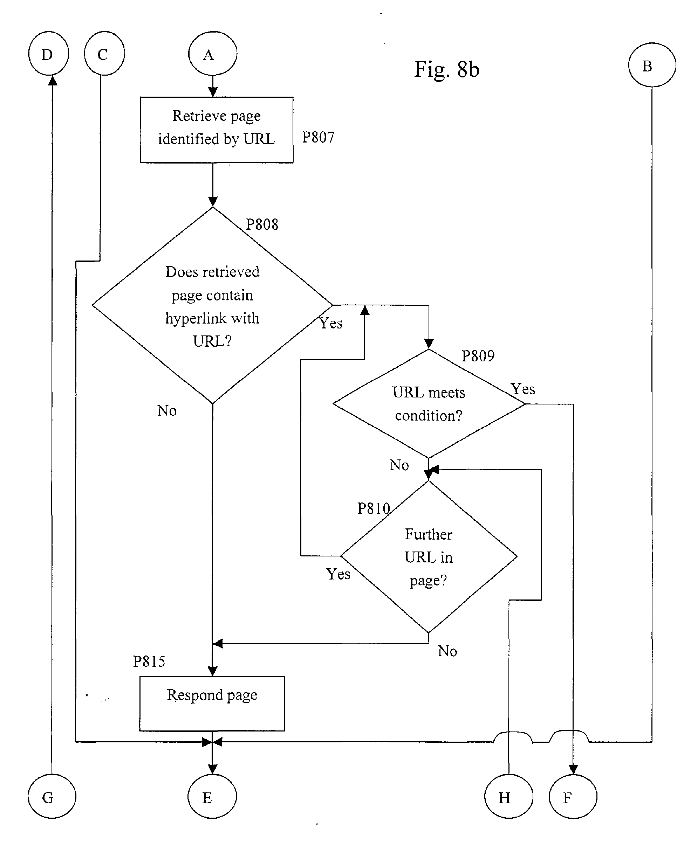

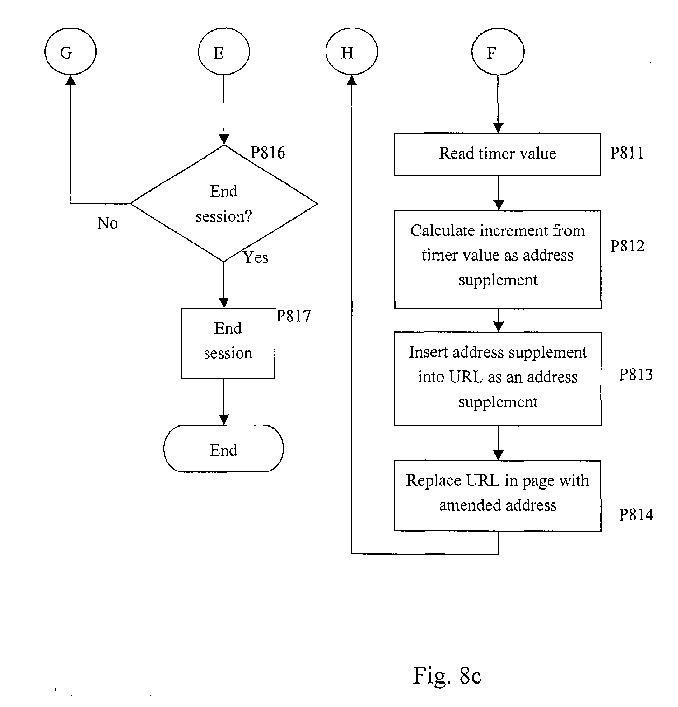

Now a detailed embodiment of the present invention shall be explained with respect to Figs. 8a and 8b, where the routine shown in Fig. 8a constitutes a specific example of the routines shown in Figs. 4, 2, 5a and 5c, for the specific case of a web server arranged to provide web pages. Furthermore the web pages are prepared in any known web page format, such as SGML (Standard Generalized Markup Language), the HyperText Markup Language (HTML) or the eXtensible Markup Language (XML). The network addresses are URLs. The routine starts with the beginning of a session in procedure P801. Then in procedure P802 it is determined if a page request has been received. A page request is a message containing an URL identifying the server. In other words, it is e.g. a URL like the one shown above. If a page request has been received, the routine passes to procedure P803, in which it is determined if the address in the requested page contains an address supplement. If it does, the address supplement is removed, and the original URL is derived in procedure P804. Then, the routine goes to feature P805, in which it is determined if the URL is valid for the server. In other words, it is determined if the URL has a valid format, and if it identifies a document that the server is arranged to output. If not, a response with a rejection message is generated in procedure P806.

If the outcome of procedure P803 is negative, then the routing immediately goes to procedure P805. If the outcome of procedure P805 is positive, then the page identified by the URL is retrieved in procedure P807, and then the routine goes to procedure P808, in order to determine if the retrieved page contains a URL. If not, the retrieved page is output in procedure P815.

On the other hand, if the retrieved page contains a URL, it is determined in procedure P809 if the URL contained in the retrieved page identifies a page belonging to a group of pages that should be kept up to date. If the URL belongs to this group, then a timer value is read in procedure P811, a time dependent increment is calculated in procedure P812, the increment is inserted into the URL as an address supplement in procedure in P813, and the URL in the retrieved page is replaced by the amended address. Then, the routine goes to procedure P810, in which it is determined if there is a further URL in the retrieved page. Also, if the outcome of the determination in procedure P809 is negative, then the routine directly passes from procedure P809 to procedure P810. If the outcome of procedure P810 is negative, then the routine goes to procedure P815, in which the (possibly amended) page is output. Thereafter, it is determined in routine P816 if the session is to be ended. If yes the session is ended in procedure P817. If not, the routine loops back to procedure P802. Also, if the outcome of procedure P802 is negative, then the routine goes to procedure P816, and the routine also goes to procedure P816 after having performed the rejection response in procedure P806.

As already mentioned previously, the method and the server of the present invention may be embodied in the form of hardware, software or any suitable combination of hardware and software. The method can therefore also be embodied as a computer program, and as a data storage medium carrying such a computer program.

Thus, the present application also relates to a server arranged to be connectable to a network and to output documents, where said network comprises a plurality of servers, said servers being arranged such that documents output by said servers are identified by network addresses, said server comprising: a document providing code section arranged to provide a document to be output by said server, and an address amending code section arranged such that if said document to be output comprises one or more network addresses, said address amending code section determines if a network address meets a predetermined condition, amends a network address that meets said predetermined condition with an address supplement, and outputs the document to be output with the amended address.

The present application also relates to a server arranged to be connectable to the Internet and to output pages, e.g. web pages, where such pages are identified by URLs, said server comprising: a page providing code section arranged to provide a page to be output by said server, and an address amending code section arranged such that if said page to be output comprises one or more URLs in hyperlinks, said address amending code section determines if such a URL meets a predetermined condition, amends a URL that meets said predetermined condition with an address supplement, and outputs the page with the amended address.

The present application also relates to a server arranged to be connectable to the Internet and to output pages, e.g. web pages, where such pages are identified by URLs, said server comprising: a page providing code section arranged to provide a page to be output by said server, and an address amending code section arranged such that if said page to be output comprises one or more URLs in hyperlinks, said address amending code section amends each URL that is contained in a hyperlink with an address supplement, and outputs the page with the amended address.

## Claims

1. A method of controlling a predetermined server in a network, said predetermined server being arranged to output documents, where said network comprises a plurality of servers, said servers of said network being arranged such that documents output by said servers are identified by network addresses, said method comprising: providing a document to be output by said predetermined server, and, if said document to be output comprises one or more network addresses, determining if a network address meets a predetermined condition, amending a network address that meets said predetermined condition with an address supplement, and outputting the document to be output with the amended address.

2. A method according to claim 1, wherein said document to be output is provided in response to a request sent to said predetermined server, where said request contains a network address identifying said document or an amended address derived from a network address identifying said document.

3. A method according to claim 2, further comprising distinguishing between network addresses and amended addresses in a request, and if an address is an amended address, removing the address supplement from the amended address to thereby derive a network address, and providing a document identified by the derived network address.

4. A method according to claim 2 or 3, wherein said predetermined condition is met if an address is associated with a link element, where link elements have a format such that said link elements can be used by a user of said network who receives a document containing said link elements in order to generate a request containing the address associated with said link element.

5. A method according to one of claims 1 to 4, wherein said address supplement comprises a data element arranged to identify said predetermined server.

6. A method according to claim 5, wherein said address supplement comprises a constant associated with said predetermined server.

7. A method according to one of claims 1 to 5, wherein said address supplement comprises a variable data element arranged to change amended addresses included in documents output subsequently to one another, the amended addresses being derived from one network address.

8. A method according to claim 7, wherein said address supplement is generated on the basis of a counter value.

9. A method according to claim 8, wherein said counter value is incremented each time that an amended address is included in a document being sent out.

10. A method according to claim 8, wherein said predetermined server is arranged to conduct individual user sessions for individual users accessing said server, and an individual user counter value is assigned to each individual user.

11. A method according to claim 10, wherein said individual user counter value is reset to a predetermined value at the beginning of each user session.

12. A method according to claim 7, wherein said address supplement is generated on the basis of a timer value.

13. A method according to claim 12, wherein said address supplement is generated on the basis of a time dependent increment.

14. A method according to one of claims 1 to 13, wherein said providing of a document to be output comprises calling a prepared document stored in said predetermined server.

15. A method according to one of claims 1 to 13, wherein said providing of a document to be output comprises generating a document from document elements stored in said predetermined server.

16. A method according to one of claims 1 to 15, wherein said predetermined condition is met if said network address identifies a document arranged to be output by said predetermined server.

17. A method according to one of claims 1 to 15, wherein said predetermined condition is met if said network address identifies a document belonging to a predetermined group of documents arranged to be output by said predetermined server.

18. A method according to one of claims 1 to 17, wherein said network addresses have a format such that a first part of a network address identifies a server in said network, and a second part identifies a document to be sent by the server identified by said first part, where said amending of said network address is performed by changing said second part.

19. A method according to one of claims 1 to 18, wherein said predetermined server is controlled to output documents conforming to a predetermined markup language.

20. A method according to claim 19, wherein said predetermined markup language is one of the Standard Generalized Markup Language, the HyperText Markup Language and the eXtensible Markup Language.

21. A method according to one of claims 1 to 20, wherein said network is the Internet and said network addresses are Uniform Resource Locators.

22. A method according to claim 21, wherein said documents are web pages, and said addresses in said documents are hyperlinks embedded in said web pages.

23. A method according to one of claims 1 to 20, wherein said network is a Local Area Network, a Metropolitan Area Network, or a Wide Area Network.

24. A computer program arranged to execute a method according to one of claims 1 to 23 when loaded on a computer.

25. A storage medium for storing computer programs, said storage medium storing a program according to claim 24.

26. A server arranged to be connectable to a network and to output documents, where said network comprises a plurality of servers, said network servers being arranged such that documents output by said network servers are identified by network addresses, said server comprising: a document providing unit arranged to provide a document to be output by said server, and an address amending unit arranged such that if said document to be output comprises one or more network addresses, said address amending unit determines if a network address meets a predetermined condition, amends a network address that meets said predetermined condition with an address supplement, and outputs the document to be output with the amended address.

27. A server according to claim 26, wherein said server is arranged to receive requests for documents and to provide said document to be output in response to a request sent to said server, where said request contains a network address identifying said document or an amended address derived from a network address identifying said document.

28. A server according to claim 27, further arranged to distinguish between network addresses and amended addresses in a request, and is arranged such that if an address is an amended address, to remove the address supplement from the amended address to thereby derive a network address, and to provide a document identified by the derived network address.

29. A server according to claim 27 or 28, wherein said predetermined condition is met if an address is associated with a link element, where link elements have a format such that said link elements can be used by a user of said network who receives a document containing said link elements in order to generate a request containing the address associated with said link element.

30. A server according to one of claims 26 to 29, wherein said address supplement comprises a data element arranged to identify said server.

31. A server according to claim 30, wherein said address supplement comprises a constant associated with said server.

32. A server according to one of claims 26 to 30, wherein said address supplement comprises a variable data element arranged to change amended addresses included in documents output subsequently to one another, the amended addresses being derived from one network address.

33. A server according to claim 32, wherein said server is arranged such that said address supplement is generated on the basis of a counter value.

34. A server according to claim 33, wherein said server is arranged such that said counter value is incremented each time that an amended address is included in a document being sent out.

35. A server according to claim 33, wherein said server is arranged to conduct individual user sessions for individual users accessing said server, and an individual user counter value is assigned to each individual user.

36. A server according to claim 35, wherein said server is arranged such that said individual user counter value is reset to a predetermined value at the beginning of each user session.

37. A server according to claim 32, wherein said server is arranged such that said address supplement is generated on the basis of a timer value.

38. A server according to claim 37, wherein said server is arranged such that said address supplement is generated on the basis of a time dependent increment.

39. A server according to one of claims 26 to 38, wherein said server comprises a storage unit arranged to store documents identified by network addresses, and said server is arranged such that said providing of a document to be output comprises calling a prepared document stored in said storage unit.

40. A server according to one of claims 26 to 38, wherein said server comprises a storage unit arranged to store document elements of documents identified by network addresses, and said server is arranged such that said providing of a document to be output comprises generating a document from document elements stored in said storage unit.

41. A server according to one of claims 26 to 40, wherein said server is arranged such that said predetermined condition is met if said network address identifies a document arranged to be output by said server.

42. A server according to one of claims 26 to 40, wherein said server is arranged such that said predetermined condition is met if said network address identifies a document belonging to a predetermined group of documents arranged to be output by said server.

43. A server according to one of claims 26 to 42, wherein said network addresses have a format such that a first part of a network address identifies a server in said network, and a second part identifies a document to be sent by the server identified by said first part, where said amending of said network address is performed by changing said second part.

44. A server according to one of claims 26 to 43, wherein said server is arranged to be controlled to output documents conforming to a predetermined markup language.

45. A server according to claim 44, wherein said predetermined markup language is one of the Standard Generalized Markup Language, the HyperText Markup Language and the eXtensible Markup Language.

46. A server according to one of claims 26 to 45, wherein said network is the Internet and said network addresses are Uniform Resource Locators.

47. A server according to claim 46, wherein said documents are web pages, and said addresses in said documents are hyperlinks embedded in said web pages.

48. A server according to one of claims 26 to 45, wherein said network is a Local Area Network, a Metropolitan Area Network, or a Wide Area Network.
